(19) Europäisches Patentamt
European Patent Office
Office européen des brevets

(11) Veröffentlichungsnummer: **0 264 400**
**B1**

(12) **EUROPÄISCHE PATENTSCHRIFT**

(45) Veröffentlichungstag der Patentschrift: **04.10.89**

(51) Int. Cl.⁴: **C 07 F 7/18**

(21) Anmeldenummer: **87902368.7**

(22) Anmeldetag: **30.04.87**

(86) Internationale Anmeldenummer: **PCT/CH 87/00051**

(87) Internationale Veröffentlichungsnummer: **WO 87/06587 (05.11.87 Gazette 87/24)**

(54) **SYNTHESEVERFAHREN.**

(30) Priorität: **02.05.86 CH 1810/86**

(43) Veröffentlichungstag der Anmeldung: **27.04.88 Patentblatt 88/17**

(45) Bekanntmachung des Hinweises auf die Patenterteilung: **04.10.89 Patentblatt 89/40**

(84) Benannte Vertragsstaaten: **AT BE CH DE FR GB IT LI LU NL SE**

(56) Entgegenhaltungen:
**GB-A-1 153 824**
**GB-A-1 233 854**

**W. Theilheimer:"Syynthetic Methods of Organic Chemistry, Band 24, 1970, S. Karger, Basel (CH), Seite 205, Nr. 467**

(73) Patentinhaber: **SANITIZED AG, Lyssachstrasse 95, CH- 3400 Burgdorf (CH)**

(72) Erfinder: **MEBES, Bruno, Lyssachstrasse 95, CH-3400 Burgdorf (CH)**
Erfinder: **LÜDI, Christine, Dammstrasse 26, CH-3400 Burgdorf (CH)**

(74) Vertreter: **Fischer, Franz Josef, c/o Bovard AG Optingenstrasse 16, CH- 3000 Bern 25 (CH)**

**EP 0 264 400 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur Herstellung von quaternären Ammoniumverbindungen, die durch eine Silylgruppe substituiert sind. Diese Verbindungen sind insbesondere nützlich als bakteriostatische und fungistatische Mittel für Textilien und andere Substrate.

Seit langem besitzen die quaternären Ammoniumverbindungen eine Bedeutung in der Desinfektionspraxis. Die Verbindungen, welche auch Quats oder Invertseifen genannt werden, haben als Desinfektionsmittel eine beträchtliche Verbreitung gefunden. Aufgrund von verschärften ökologischen und toxikologischen Auflagen, die von Seiten der Behörden an solche Produkte gestellt werden, ist die Wichtigkeit der quaternären Ammoniumverbindungen einer zunehmend. Sie weisen nämlich insbesondere folgende Vorteile auf: Schnelle Wirksamkeit aufgrund ihrer Oberflächenaktivität, hohe bakteriostatische, fungistatische und algistatische Wirksamkeit, geringe Toxizität, biologische Abbaubarkeit, keine Irritationen (Hautreizungen), kein störender oder schädigender Geruch, Lagerstabilität, Hartwasserstabilität, gute Kombinierbarkeit mit anderen bioziden Grundstoffen und Eingehen von stabilen Bindungen mit Textilien oder anderen Substraten, wodurch sie eine dauerhafte bakteriostatische bzw. fungistatische Ausrüstung ermöglichen.

Solche quaternäre Ammoniumverbindungen mit desinfizierenden Eigenschaften sind schon seit längerer Zeit bekannt, beispielsweise aus GB-A-1 153 824, GB-A-1 233 854, GB-A-1 342 184, GB-A-1 386 876 und GB-A-1 433 303.

In der GB-A-1 233 854 sind Organosilyl-quaternäre Ammoniumverbindungen der folgenden Formel beschrieben:

$$\left[ X_a R_{3-a}\ Si\ R'\ \overset{\oplus}{N} R''_2 R''' \right] \quad Y$$

worin

X Hydroxyl oder ein hydrolysierbares Radikal ist,
R Alkyl mit weniger als 7 C-Atomen ist,
R' ein zweiwertiger Kohlenwasserstoffrest mit 3 - 18 C-Atomen oder ein zweiwertiger Kohlenwasserstoffrest mit 3 - 18 C-Atomen, der Ether- oder Thioetherbindungen enthält, ist,
R'' Wasserstoff oder Alkyl mit weniger als 7 C-Atomen bedeutet,
R''' Alkyl mit 12 oder mehr C-Atomen ist,
Y Chlor, Brom oder Iod oder ein anderes Säureanion ist, und
a 2 oder 3 ist.

Gemäss Beispiel 2 der genannten Druckschrift kann eine solche Verbindung z. B. hergestellt werden, indem 60 g Octadecyldimethylamin mit 40 g Chlorpropyltrimethoxysilan bei einer Temperatur von 100° C während 70 h in einem Autoklaven umgesetzt werden. Es wird ein Produkt in Form eines orangen Öles in einer Ausbeute von 72 % erhalten. Die verhältnismässig lange Reaktionszeit kann verkürzt werden und das Auftreten von Nebenprodukten (Polymerisationsprodukte, Produkte mit abgespaltenen Alkoxygruppen) kann vermieden werden, indem das 3-Chlorpropyltrimethoxysilan durch 3-Iodpropyltrimethoxysilan ersetzt wird. Dieses Verfahren besitzt jedoch den Nachteil, dass das entsprechende Iodid im Vergleich zum Chlorid teurer ist. In einem solchen Verfahren kann das Chlorid zuerst durch eine Finkelsteinreaktion quantitativ in das entsprechende Iodid übergeführt werden, welches dann mit dem tertiären Amin umgesetzt wird. Im übrigen nat sich die Umsetzung in Gegenwart eines alkoholischen Lösungsmittels als günstig erwiesen.

Es war nun Aufgabe der vorliegenden Erfindung, ein Verfahren zur Verfügung zu stellen, welches eine verminderte Reaktionszeit aufweist, ohne dass jedoch die wesentlich teureren Iodidverbindungen verwendet werden müssen. Diese Aufgabe wurde durch das im Patentanspruch 1 definierte Verfahren gelöst.

Gegenstand der vorliegenden Erfindung ist demzufolge das im Patentanspruch 1 definierte Verfahren zur Herstellung der quaternären Ammoniumsalze der Formel I.

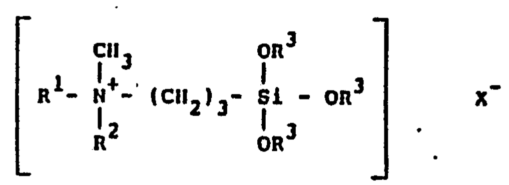

worin

$R^1$ geradkettiges Alkyl mit 8 bis 16 C-Atomen,
$R^2$ Methyl oder geradkettiges Alkyl mit 8 bis 16 C-Atomen,
$R^3$ Methyl, Ethyl, Propyl oder Butyl bedeuten, wobei die $R^3$-Reste gleich oder verschieden sein können und
X ein Gegenanion ist.

Vorzugsweise bedeutet $R^1$ n-Dodecyl und $R^2 = R^3$ = Methyl. Normalerweise ist das Gegenanion $X^-$ vorwiegend das Chloridion, wobei ein kleiner Anteil das Iodidion darstellt. Es kann jedoch durch übliche Reaktionen durch andere Anionen ersetzt werden. Solche sind beispielsweise Fluorid, Sulfat, Acetat oder Phosphat. Vorzugsweise wird die Reaktion in Gegenwart eines Lösungsmittels durchgeführt, wobei Ethylenglykolmonomethylether, Propylenglykolmonomethylether, Butylenglykolmonomethylether, Ethylenglykolmonoethylether, Propylenglykolmonoethylether, Butylenglykolmonoethylether, Ethylenglykolmonopropylether Propylenglykolmonopropylether, Butylenglykolmonopropylether,

Ethylenglykolmonobutylether, Propylenglykolmonobutylether oder Butylenglykolmonobutylether, Methanol, Ethanol, Propanol oder Isopropanol geeignet sind. Besonders bevorzugt ist Propylenglykolmonomethylether. Als Katalysator wird in der Regel 5 - 50 mol % und vorzugsweise 10 - 15 mol % Kalium- oder Natriumiodid, bezogen auf das tertiäre Amin der Formel II verwendet.

Die Reaktion kann in der Regel im Temperaturbereich von 80 - 120° C durchgeführt werden, wobei sich etwa 100°C als beste Reaktionstemperatur erwiesen hat. Bei einem Einsatz von 10 % Kaliumiodid ist eine Reaktionsdauer von 8 - 9 h erforderlich. Im Gegensatz dazu beträgt die Reaktionsdauer ohne Verwendung von Alkaliiodid als Katalysator ungefähr 86 h. Überraschenderweise wurde somit durch die Zugabe von 10 % Alkaliiodid die Reaktionszeit auf einen Zehntel verkürzt.

Ein weiterer Vorteil des erfindungsgemässen Verfahrens besteht in der grösseren Reinheit der Produkte. Dadurch ist eine direkte Verwendung der Reaktionsmischung ohne weiteren Reinigungsschritt möglich. Durch lange Reaktionszeiten von 50 h und mehr, insbesondere bei Abwesenheit von Lösungsmitteln, können unerwünschte Nebenreaktionen, wie Abspaltung von Alkoxygruppen oder Polymerisatbildung (bis zu 3 %) auftreten, die durch das vorliegende verbesserte Verfahren unterdrückt werden. Neben einer grösseren Reinheit wird deshalb auch eine höhere Ausbeute an gewünschten Produkten erhalten.

Beispiele von gehinderten Silyl-quaternären Ammoniumverbindungen, welche erfindungsgemäss erhalten werden können, sind folgende:

3-(Trimethoxysilyl)propyl-di-n-octylmethyl-ammoniumchlorid
3-(Trimethoxysilyl)propyl-n-octyldimethyl-ammoniumchlorid
3-(Trimethoxysilyl)propyl-di-n-nonylmethyl-ammoniumchlorid
3-(Trimethoxysilyl)propyl-n-nonyldimethyl-ammoniumchlorid
3-(Trimethoxysilyl)propyl-di-n-decylmetnyl-ammoniumchlorid
3-(Trimethoxysilyl)propyl-n-decyldimethyl-ammoniumchlorid
3-(Trimethoxysilyl)propyl-di-n-undecylmetnyl-ammoniumchlorid
3-(Trimethoxysilyl)propyl-n-undecyldimethyl-ammoniumchlorid
3-(Trimethoxysilyl)propyl-di-n-dodecylmethyl-ammoniumchlorid
3-(Trimethoxysilyl)propyl-n-dodecyldimethyl-ammoniumchlorid
3-(Trimethoxysilyl)propyl-di-n-tridecylmethyl-ammoniumchlorid
3-(Trimethoxysilyl)propyl-n-tridecyldimethyl-ammoniumchlorid
3-(Trimethoxysilyl)propyl-di-n-tetradecylmethyl-ammoniumchlorid
3-(Trimethoxysilyl)propyl-n-tetradecyldimethyl-ammoniumchlorid
3-(Triethoxysilyl)propyl-di-n-octylmethyl-ammoniumchlorid
3-(Triethoxysilyl)propyl-n-octyldimethyl-ammoniumchlorid
3-(Triethoxysilyl)propyl-di-n-nonylmethyl-ammoniumchlorid
3-(Triethoxysilyl)propyl-n-nonyldimethyl-ammoniumchlorid
3-(Triethoxysilyl)propyl-di-n-decylmethyl-ammoniumchlorid
3-(Triethoxysilyl)propyl-n-decyldimethyl-ammoniumchlorid
3-(Triethoxysilyl)propyl-di-n-undecylmetnyl-ammoniumchlorid
3-(Triethoxysilyl)propyl-n-undecyldimethyl-ammoniumchlorid
3-(Triethoxysilyl)propyl-di-n-dodecylmethyl-ammoniumcnlorid
3-(Triethoxysilyl)propyl-n-dodecyldimethyl-ammoniumchlorid
3-(Triethoxysilyl)propyl-di-n-tridecylmethyl-ammoniumchlorid
3-(Triethoxysilyl)propyl-n-tridecyldimethyl-ammoniumchlorid
3-(Triethoxysilyl)propyl-di-n-tetradecylmethyl-ammoniumchlorid
3-(Triethoxysilyl)propyl-n-tetradecyldimethyl-ammoniumchlorid
3-(Tripropoxysilyl)propyl-di-n-octylmethyl-ammoniumchlorid
3-(Tripropoxysilyl)propyl-n-octyldimethyl-ammoniumchlorid
3-(Tripropoxysilyl)propyl-di-n-nonylmethyl-ammoniumchlorid
3-(Tripropoxysilyl)propyl-n-nonyldimethyl-ammoniumchlorid
3-(Tripropoxysilyl)propyl-di-n-decylmethyl-ammoniumchlorid
3-(Tripropoxysilyl)propyl-n-decyldimethyl-ammoniumchlorid
3-(Tripropoxysilyl)propyl-di-n-undecylmethyl-ammoniumchlorid
3-(Tripropoxysilyl)propyl-n-undecyldimethyl-ammoniumchlorid
3-(Tripropoxysilyl)propyl-di-n-dodecylmethyl-ammoniumchlorid
3-(Tripropoxysilyl)propyl-n-dodecyldlmethyl-ammoniumchlorid
3-(Tripropoxysilyl)propyl-di-n-tridecylmethyl-ammoniumchlorid
3-(Tripropoxysilyl)propyl-n-tridecyldimethyl-ammoniumchlorid
3-(Tripropoxysilyl)propyl-di-n-tetradecylmethyl-ammoniumchlorid
3-(Tripropoxysilyl)propyl-n-tetradecyldimethyl-ammoniumchlorid
3-(Tributoxysilyl)propyl-di-n-octylmethyl-ammoniumchlorid
3-(Tributoxysilyl)propyl-n-octyldimethyl-ammoniumchlorid
3-(Tributoxysilyl)propyl-di-n-nonylmethyl-ammoniumchlorid
3-(Tributoxysilyl)propyl-n-nonyldimethyl-ammoniumchlorid

3-(Tributoxysilyl)propyl-di-n-decylmethyl-ammoniumchlorid
3-(Tributoxysilyl)propyl-n-decyldimethyl-ammoniumchlorid
3-(Tributoxysilyl)propyl-di-n-undecylmethyl-ammoniumchlorid
3-(Tributoxysilyl)propyl-n-undecyldimethyl-ammoniumchlorid
3-(Tributoxysilyl)propyl-di-n-dodecylmethyl-ammoniumchlorid
3-(Tributoxysilyl)propyl-n-dodecyldimethyl-ammoniumchlorid
3-(Tributoxysilyl)propyl-di-n-tridecyimethyl-ammoniumchlorid
3-(Tributoxysilyl)propyl-n-tridecyldimethyl-ammoniumchlorid
3-(Tributoxysilyl)propyl-di-n-tetradecylmethyl-ammoniumchlorid
3-(Tributoxysilyl)propyl-n-tetradecyldimethyl-ammoniumchlorid

Das nachstehende Beispiel dient zur Erläuterung der Erfindung.

**Beispiel**

Es wird 35,1 g Dowanol PM (Propylenglykolmonomethylether) in ein mit $N_2$ gespültes Reaktionsgefäss gegeben. Dann wird unter kräftigem Rühren 1,5 g (0,010 mol) Natriumiodid bei Zimmertemperatur zugegeben. Nach der Auflösung des Natriumiodids wird 21,5 g (0,015 mol) Trimethoxysilan zugesetzt. Dabei bildet sich ein leicht gelber Niederschlag. Das Reaktionsgemisch wird auf 100°C erwärmt und bei dieser Temperatur wird 18,7 g (0,100 mol) Decyldimethylamin zugegeben und während 8 - 9 h bei dieser Temperatur unter Rühren umgesetzt.

Die Reaktionsmischung wird schließlich auf 15°C abgekühlt und der Salzniederschlag abfiltriert. Das Filtrat, eine gelb-orange, klare leicht viskose Flüssigkeit, stellt eine Lösung von 3-(Trimethoxysilyl)propyl-decyl-dimethylammoniumchlorid dar. Die erhaltene Lösung, welche einen Gehalt von 40 - 50 Gew.-% aufweist, kann durch weitere Lösungsmittelzugabe auf die gewünschte Konzentration verdünnt werden.

**Patentansprüche**

1. Verfahren zur Herstellung von quaternären Ammoniumsalzen der Formel

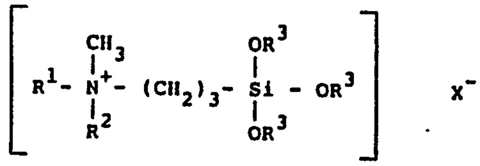
(I)

worin $R^1$ geradkettiges Alkyl mit 8 bis 16 C-Atomen ist, $R^2$ Methyl oder geradkettiges Alkyl mit 8 bis 16 C-Atomen ist, $R^3$ Methyl, Ethyl, Propyl oder Butyl ist, wobei die $R^3$-Reste gleich oder verschieden sein können und $X^-$ ein Gegenanion darstellt, durch Umsetzen eines tertiären Amins der Formel

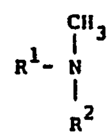
(II)

mit einem Chlorpropyltrialkoxysilan der Formel

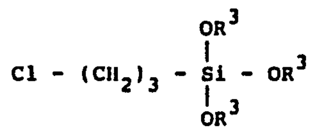
(III)

dadurch gekennzeichnet, dass die Reaktion in Gegenwart eines katalytischen Anteils an Alkaliiodid durchgeführt wird und das erhaltene Mischhalogenid der Formel I gegebenenfalls in ein anderes Salz übergeführt wird, wobei kein zusätzlicher Reinigungsschritt erforderlich ist.

2. Verfahren nach Anspruch 1 dadurch gekennzeichnet, dass $R^1$ und/oder $R^2$ n-Decyl ist.

3. Verfahren gemäss Anspruch 1 dadurch gekennzeichnet, dass der Anteil an Alkaliiodid 5 - 50 mol % und vorzugsweise 5 - 15 mol % bezogen auf das eingesetzte Amin der Formel II beträgt.

4. Verfahren nach einem der Ansprüche 1 bis 3, dadurch gekennzeichnet, dass das Mol-Verhältnis Amin der Formel II: Silan der Formel III: Alkaliiodid 1 : 1,05 : 0,1 beträgt.

5. Verfahren nach einem der Ansprüche 1 bis 4, dadurch gekennzeichnet, dass als Alkaliiodid Kaliumiodid verwendet wird.

6. Verfahren nach einem der Ansprüche 1 bis 4, dadurch gekennzeichnet, dass als Alkaliiodid Natriumiodid verwendet wird.

7. Verfahren nach einem der Ansprüche 1 bis 6, dadurch gekennzeichnet, dass die Reaktion in Gegenwart eines Lösungsmittels durchgeführt wird.

8. Verfahren gemäss Anspruch 7, dadurch

gekennzeichnet, dass das Lösungsmittel Ethylenglykolmonomethylether, Propylenglykolmonomethylether, Butylenglykolmonomethylether, Ethylenglykolmonoethylether, Propylenglykolmonoethylether, Butylenglykolmonoethylether, Ethylenglykolmonopropylether, Propylenglykolmonopropylether, Butylenglykolmonopropylether, Ethylenglykolmonobutylether, Propylenglykolmonobutylether oder Butylenglykolmonobutylether ist.

9. Verfahren nach einem der Ansprüche 7 oder 8, dadurch gekennzeichnet, dass die Masse des Lösungsmittels etwa der Summe der Massen der Reaktanten entspricht.

10. Verfahren nach einem der Ansprüche 1 bis 9, dadurch gekennzeichnet, dass die Reaktion bei Temperaturen von 80 - 120°C und vorzugsweise bei etwa 100°C durchgeführt wird.

## Claims

1. Process for preparing quaternary ammonium salts of the formula

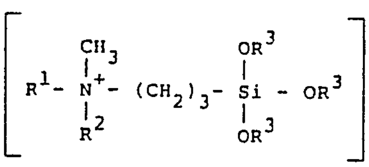

$X^-$ (I)

wherein $R^1$ is straight-chain alkyl having 8 to 16 C atoms, $R^2$ is methyl or straight-chain alkyl having 8 to 16 C atoms, $R^3$ is methyl, ethyl, propyl, or butyl, in which connection the $R^3$ radicals may be the same or different, and $X^-$ represents a counteranion, by reacting a tertiary amine of the formula

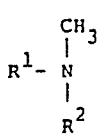

(II)

with a chloropropyltrialkoxy silane of the formula

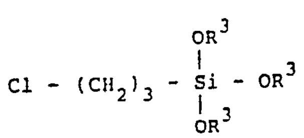

(III)

characterized in that the reaction is carried out in the presence of a catalytic proportion of alkali iodide, and the resulting mixed halide of formula I is optionally converted into another salt, no additional purification step being necessary.

2. Process according to claim 1, characterized in that $R^1$ and/or $R^2$ is n-decyl.

3. Process according to claim 1, characterized in that the proportion of alkali iodide is 5 - 50 mol-%, and preferably 5 - 15 mol-%, relative to the amine of formula II utilized.

4. Process according to one of the claims 1 to 3, characterized in that the mole ratio of amine of formula II : silane of formula III : alkali iodide is 1 : 1.05 : 0.1.

5. Process according to one of the claims 1 to 4, characterized in that potassium iodide is used as the alkali iodide.

6. Process according to one of the claims 1 to 4, characterized in that sodium iodide is used as the alkali iodide.

7. Process according to one of the claims 1 to 6, characterized in that the reaction is carried out in the presence of a solvent.

8. Process according to claim 7, characterized in that the solvent is ethyleneglycol monomethyl ether, propyleneglycol monomethyl ether, butyleneglycol monomethyl ether, ethyleneglycol monoethyl ether, propyleneglycol monoethyl ether, butyleneglycol monoethyl ether, ethyleneglycol monopropyl ether, propyleneglycol monopropyl ether, butyleneglycol monopropyl ether, ethyleneglycol monobutyl ether, propyleneglycol monobutyl ether, or butyleneglycol monobutyl ether.

9. Process according to one of the claims 7 or 8, characterized in that the mass of the solvent corresponds to approximately the sum of the masses of the reactants.

10. Process according to one of the claims 1 to 9, characterized in that the reaction is carried out at temperatures of 80 - 120°C and preferably at about 100°C.

## Revendications

1. Procédé de préparation des sels d'ammonium quaternaire de la formule

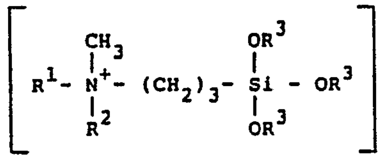

$X^-$ (I)

dans laquelle $R^1$ est un groupe alkyle à chaîne linéaire ayant de 8 à 16 atomes de carbone, R2 est un groupe méthyle ou un groupe alkyle à chaîne linéaire ayant de 8 à 16 atomes de carbone, $R^3$ est un groupe méthyle, éthyle, propyle ou butyle où les restes $R^3$ peuvent être semblables ou différents et $X^-$ représente un

contre-anion, en faisant réagir une amine tertiaire de la formule

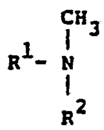

(II)

avec un chlorpropyltrialkoxysilane de la formule

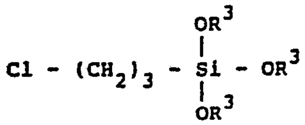

(III)

caractérisé en ce que la réaction est conduite en présence d'une portion catalytique d'un iodure alcalin et en ce que le mélange d'halogénure obtenu de la formule I peut être converti en un autre sel sans qu'une phase additionnelle de purification soit nécessaire.

2. Procédé selon la revendication 1, caractérisé en ce que $R^1$ et/ou $R^2$ est un groupe n-décyle.

3. Procédé selon la revendication 1, caractérisé en ce que la portion de iodure alcalin se monte de 5 % à 50 % en mole et de préférence de 5 - 15 % en mole relativement à l'amine utilisée selon la formule II.

4. Procédé selon l'une des revendications 1 à 3, caractérisé en ce que le rapport en mole de l'amine de la formule II: du silane de la formule III: du iodure alcalin est de 1 : 1,05 : 0,1.

5. Procédé selon l'une des revendications 1 à 4, caractérisé en ce qu'on utilise du iodure de potassium comme iodure alcalin.

6. Procédé selon l'une des revendications 1 à 4, caractérisé en ce que l'on utilise du iodure de sodium comme iodure alcalin.

7. Procédé selon l'une des revendications 1 à 6, caractérisé en ce que la réaction est effectuée en présence d'un solvant.

8. Procédé selon la revendication 7, caractérisé en ce que le solvant est l'éther monométhylique de l'éthylène-glycol, l'éther monométhylique du propylène-glycol, l'éther monométhylique du butylène-glycol, l'éther monoéthylique de l'éthylène-glycol, l'éther monoéthylique du propylène-glycol, l'éther monoéthylique du butylène-glycol, l'éther monopropylique de l'éthylène-glycol, l'éther monopropylique du propylène-glycol, l'éther monopropylique du butylène-glycol, l'éther monobutylique de l'éthylène-glycol, l'éther monobutylique du propylène-glycol ou l'éther monobutylique du butylène-glycol.

9. Procédé selon l'une des revendication 7 ou 8, caractérisé en ce que la masse de solvant correspondant approximativement à la somme des masses de réactants.

10. Procédé selon l'une des revendications 1 à 9, caractérisé en ce que la réaction est effectuée à des températures allant de 80° à 120° et de préférence à une température d'environ 100°.